# FASCICULE DE BREVET EUROPEEN

(11) **EP 2 076 670 B1**
(45) Date de publication et mention de la délivrance du brevet: **29.12.2010**
(21) Numéro de dépôt: 06820216.7
(22) Date de dépôt: 12.10.2006
(51) Int. Cl.: F03B 7/00, F03B 17/06

(54) **APPAREIL HYDROELECTRIQUE POUR LA PRODUCTION D'ENERGIE ELECTRIQUE, NOTAMMENT A PARTIR DE COURANTS DE MAREES**
HYDROELEKTRISCHE VORRICHTUNG ZUR ERZEUGUNG VON ELEKTRISCHER ENERGIE HAUPTSÄCHLICH AUS GEZEITENSTRÖMUNG
HYDROELECTRIC APPARATUS FOR GENERATING ELECTRIC POWER MAINLY FROM TIDAL CURRENTS

(43) Date de publication de la demande: 08.07.2009
(73) Titulaire: Poupinet, Georges, 27200 Vernon (FR)
(72) Inventeur: Poupinet, Georges, 27200 Vernon (FR)
(74) Mandataire: Richard, François-Régis
(86) Numéro de dépôt international: PCT/FR2006/002318
(87) Numéro de publication internationale: WO 2008/043886

(56) Documents cités:
- WO-A-01/06120
- WO-A-2006/060761
- FR-A1- 2 278 941
- NL-A- 8 500 252
- US-A- 4 301 377
- US-A- 4 843 249

## Description

### Domaine technique

De nombreuses recherches sont faites actuellement pour arriver à une production massive d'électricité par des "microsources" d'énergies renouvelables, décentralisées et multipliables à volonté : petites turbines, cellules photovoltaïques, éoliennes, etc.

La présente invention s'inscrit dans cette démarche. Elle a pour objectif principal le captage de l'énergie des courants de marée en fonction du coefficient plus ou moins élevé de ces marées à tout moment. De manière alternative, on pourra également prévoir que ce captage se fait à partir d'autres courants marins ou à partir de courants fluviaux.

Plus précisément, l'invention concerne un appareil hydroélectrique comme défini dans le préambule de la revendication 1. Un tel appareil est connu du document US-A-4301377.

### Etat de la technique

Quelques réalisations répondant à la définition ci-dessus sont connues de l'état de la technique. Certaines de ces constructions mettent en oeuvre des hydroliennes du type à hélices ou à pales, ces dernières étant dérivées directement des éoliennes utilisées en relation avec le vent.

Toutefois, les appareils connus de l'art antérieur nécessitent généralement la mise en oeuvre de constructions complexes pour leur permettre de résister aux conditions difficiles de l'environnement dans lequel ils sont destinés à fonctionner. Malgré toutes les précautions prises, ces mécanismes restent toujours sensibles à leur environnement extérieur, en particulier lorsqu'ils sont implantés en mer, au contact d'eau salée. Ainsi, ces constructions ne permettent pas de modifier facilement la profondeur d'implantation de ces appareils en fonction des caractéristiques des marées, par exemple. La profondeur de service est prédéfinie et ajustée au moment de l'implantation de l'appareil.

En outre, on peut noter qu'en l'état actuel de la technique, la surface de captage des pales étant limitée par leurs dimensions, il faut que la vitesse du courant atteigne environ 2,57 m/s (5 noeuds) pour que le générateur d'électricité puisse vraiment entrer en production. Ceci réduit considérablement le nombre de sites utilisables.

### Divulgation de l'invention

Un but principal de la présente invention est de pallier les inconvénients des appareils hydroélectriques connus de l'art antérieur, en proposant un tel appareil apte à être adapté aux changements des propriétés des courants avec lesquels il coopère pour en optimiser l'efficacité et en permettre l'implantation même dans des zones à courants relativement faibles.

A cet effet, la présente invention concerne plus particulièrement un appareil hydroélectrique comme défini dans la revendication 1.

Grâce à ces caractéristiques, le dispositif d'ajustement utilise avantageusement les propriétés de son milieu environnant pour remplir sa fonction de manière efficace et fiable, du fait que la plupart de ses constituants sont adaptés au milieu dans lequel ils sont destinés à fonctionner.

De manière préférée, le dispositif d'ajustement comporte un dispositif de pompage alimenté en énergie électrique par le dispositif électromécanique, par l'intermédiaire d'une connexion électrique, pour permettre de pomper de l'eau hors du réservoir. En outre, ce dispositif électromécanique peut avantageusement être disposé sur une portion supérieure du bâti destinée à être située en permanence à un niveau supérieur à celui de la surface du milieu aquatique.

Selon un mode de réalisation préféré, l'organe rotatif comprend un arbre de rotation relié au bâti au moyen d'au moins un palier, l'appareil comportant en outre des moyens de connexion mécanique pour relier cet arbre à au moins un arbre d'un organe rotatif d'un autre appareil hydroélectrique identique destiné à être disposé à proximité du premier.

Grâce à ces caractéristiques, un grand nombre d'appareils peuvent être reliés, préférablement par leurs arbres de rotation, pour former un ensemble capable de produire un courant électrique dans des courants faibles dans lesquels les dispositifs de l'art antérieur sont inefficaces.

Par ailleurs, les caractéristiques particulières de l'appareil hydroélectrique selon la présente invention permettent de réaliser son assemblage sur la terre ferme avant de le remorquer avec le réservoir vide jusqu'au lieu d'implantation, par exemple en mer.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:

- la figure 1 représente une vue de face simplifiée d'un appareil hydroélectrique selon un mode de réalisation préféré de l'invention;

- la figure 2 représente une vue latérale simplifiée d'un détail de construction de l'appareil de la figure 1;

- la figure 3 représente une vue partielle de face simplifiée d'un ensemble d'appareils hydroélectriques similaires à celui de la figure 1;

- la figure 4 représente une vue de face simplifiée d'un détail de construction de l'ensemble de la figure 3, et

- la figure 5 représente une vue de face simplifiée d'un appareil hydroélectrique selon une variante de réalisation de la présente invention.

### Mode(s) de réalisation de l'invention

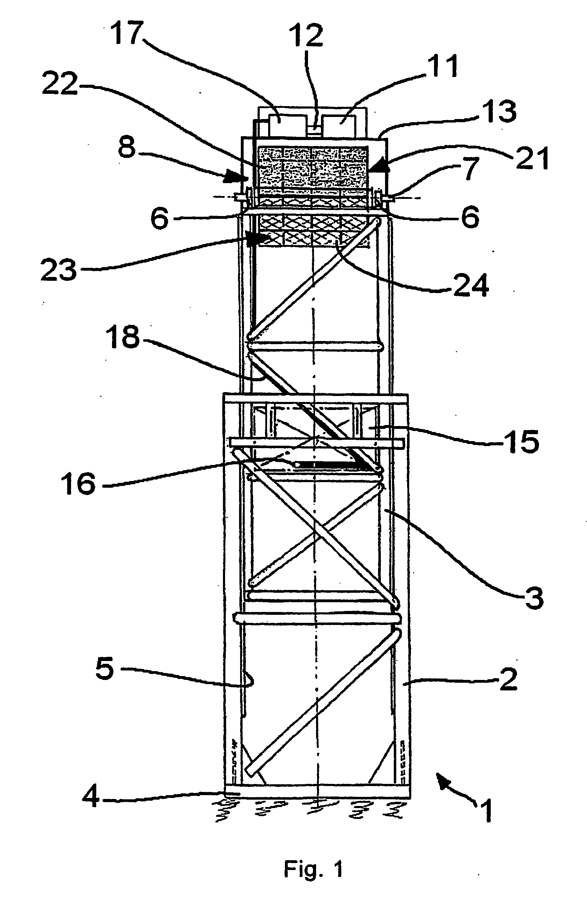

L'appareil hydroélectrique selon un mode de réalisation préféré de l'invention est présenté dans une vue de face simplifiée sur la figure 1, à titre illustratif. L'appareil comprend une structure de base définissant un bâti 1 présentant une portion basse 2 et une portion haute 3 susceptibles d'être déplacées l'une par rapport à l'autre pour présenter une position relative ajustable.

La portion basse 2 - en tubes d'acier soudés sur les figures mais pouvant être fabriquée avec d'autres matériaux - présente une base 4 de forme carrée mais qui pourrait aussi être rectangulaire. Elle est destinée à être élevée, fixée et/ou lestée sur le sol marin. On peut alternativement prévoir que l'appareil est simplement flottant sans sortir du cadre de la présente invention.

La portion haute 3, montée en translation sur des rails de guidage 5 verticaux solidaires de la portion basse 2, présente une forme similaire à celle de cette dernière, avec des dimensions transversales légèrement inférieures. On peut prévoir une butée sur la portion basse pour limiter la hauteur de pénétration de la portion haute dans la portion basse. De manière similaire, des butées peuvent être prévues pour retenir la portion haute dans la portion basse en cas de translations de grandes amplitudes.

La portion haute 3 porte des paliers 6 dans lesquels est monté l'arbre 7 d'un organe rotatif 8, représenté sur les figures sous la forme d'une roue à aubes, à titre d'exemple non limitatif.

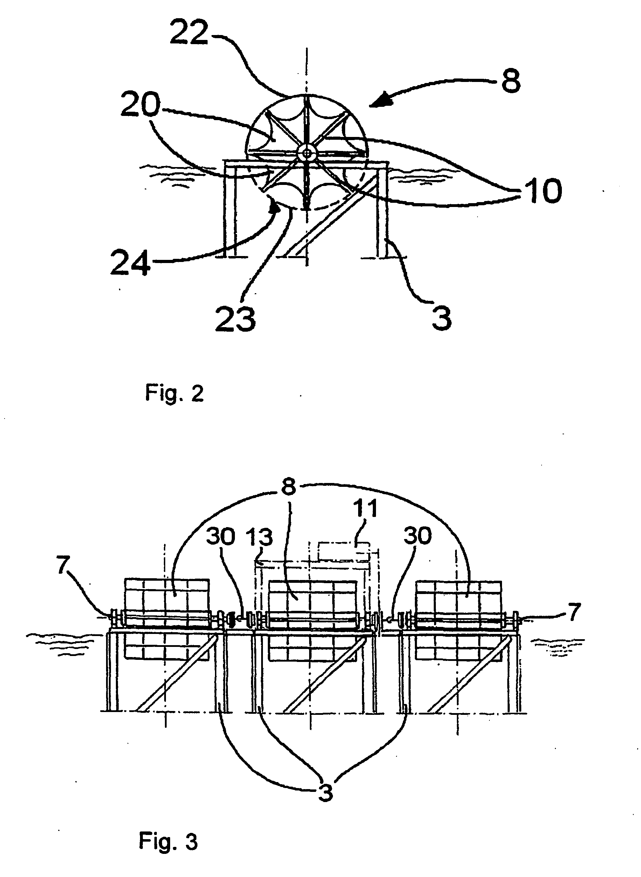

Comme cela ressortira plus clairement de la description faite en relation avec la figure 2, la roue à aubes 8 présente des surfaces d'appui 10, destinées à coopérer avec les courants du milieu aquatique dans lequel l'appareil sera implanté, pour la faire tourner.

Un dispositif électromécanique 11 de génération de courant électrique est agencé à proximité de l'arbre, 7 pour générer un courant en réponse aux mouvements de rotation de ce dernier. Le dispositif électromécanique peut être de tout type connu adapté à la mise en oeuvre de la présente invention, et comprendra en particulier un alternateur entraîné, préférablement, par l'intermédiaire d'un mécanisme multiplicateur (non représenté).

Le dispositif électromécanique 11 est préférablement relié électriquement à un des circuits de gestion et de distribution 12 de l'énergie électrique produite à partir des mouvements de l'organe rotatif.

La portion haute 3 du bâti porte un support 13, à un niveau supérieur à celui de l'organe rotatif 8 et, sur lequel les circuits de gestion et de distribution 12 sont montés, pour maintenir ces derniers hors du milieu aquatique de manière permanente. Grâce à un tel positionnement, une meilleure longévité est assurée à ces circuits que s'ils étaient immergés au moins partiellement.

La portion haute porte également un caisson étanche solide destiné à remplir une fonction de réservoir 15, agencé à une hauteur prédéfinie en dessous de l'organe rotatif, que l'homme du métier pourra choisir sans grande difficulté en fonction de ses propres besoins.

Le réservoir est muni d'une ouverture 16 dont l'accès est préférablement contrôlé par une vanne. Une électropompe 17 est également fixée sur la portion haute, préférablement hors de l'eau comme par exemple sur le support 13, en étant connectée au réservoir 15, par une conduite repérée de manière schématique par la référence 18, pour en extraire de l'eau lorsqu'elle est activée.

De manière avantageuse, la vanne peut être de type électropneumatique, à commande analogique ou numérique, et être alimentée en énergie électrique par les circuits de gestion et de distribution 12, de même que l'électropompe 17. On peut prévoir en outre que les circuits de gestion et de distribution comprennent un circuit contrôleur, programmé pour automatiser le fonctionnement de la vanne et de l'électropompe, soit en fonction de mesures effectuées par un capteur, soit de manière prédéfinie.

De manière alternative ou complémentaire, on pourra prévoir que l'appareil hydroélectrique comprend un dispositif de transmission sans fil pour commander le fonctionnement de la vanne et de l'électropompe à distance. Les circuits de gestion et de distribution sont reliés à la terre ferme par une ligne électrique (non représentée) pour permettre une exploitation ultérieure de l'énergie électrique générée par l'appareil hydroélectrique. Il est ainsi possible de prévoir une seconde ligne électrique, mise en place avec la première, pour alimenter la vanne et/ou l'électropompe depuis la terre ferme, en alternative à ce qui a été décrit ci-dessus. On peut également envisager de charger une batterie (non représentée) installée sur l'appareil, lorsque les courants le permettent, tandis que celle-ci alimente la vanne et l'électropompe en énergie électrique lorsque cela est nécessaire.

La figure 2 représente, de manière simplifiée, un détail de l'appareil hydroélectrique de la figure 1, plus précisément dans la partie supérieure de sa portion haute 3, où est située la partie mobile de l'appareil permettant la génération d'énergie électrique à partir de courants marins ou fluviaux.

Comme cela a été mentionné plus haut, la partie mobile de l'appareil est un organe rotatif 8, présentant ici la forme d'une roue à aubes à titre illustratif.

La roue comporte une pluralité de surfaces d'appui 10 s'étendant suivant des directions radiales autour de l'arbre 7 et pouvant être planes, tel que représenté, ou incurvées dans le cas de courants fluviaux. Les surfaces d'appui sont ici renforcées par des nervures 20 les reliant deux à deux. Les surfaces d'appui planes sont plus particulièrement adaptées à une mise en oeuvre de l'appareil en relation avec des courants de marée pour en exploiter le phénomène de renversement.

De manière avantageuse, on peut prévoir que l'organe rotatif 8 est enfermé dans un capot 21 de forme adaptée, cylindrique dans le mode de réalisation visible sur les figures. Le capot 21 présente deux demi-cylindres, l'un supérieur 22 et, l'autre inférieur 23. Le demi-cylindre supérieur 22 est préférablement plein pour éviter que les courants n'agissent sur la partie de l'organe rotatif située dans cette région à un instant donné, ce qui pourrait nuire au rendement de l'appareil. Le demi-cylindre inférieur 23 présente des ouvertures 24 formant des passages pour l'eau. Il pourra notamment être réalisé à l'aide d'un grillage permettant de limiter la taille d'objets ou d'animaux susceptibles d'entrer au contact de l'organe rotatif.

Bien entendu, le capot 21 est préférablement monté sur la portion haute 3 du bâti de manière amovible pour permettre les opérations de maintenance.

Il ressort de la description qui précède que l'appareil hydroélectrique selon la présente invention est destiné à être implanté, en océan ou dans un cours d'eau de type fluvial, en étant rendu solidaire du fond du milieu aquatique concerné par la portion basse 2 de son bâti. La structure de son bâti et le mode de fixation décrit rendent cet appareil particulièrement bien adapté à des régions de faibles profondeurs.

La position de la portion haute 3 peut être ajustée à la profondeur la mieux adaptée pour optimiser le captage du courant aquatique par l'organe rotatif 8, à chaque instant, par exemple en prenant en compte le coefficient de marée dans le cas d'une implantation océanique.

Typiquement, le positionnement le plus efficace pour l'organe rotatif correspond à sa moitié supérieure se trouvant légèrement au-dessus de la surface du milieu aquatique, tandis qu'au moins une portion de sa moitié inférieure se trouve immergée.

Dans ce but, la vanne et l'électropompe 17 peuvent être actionnées simultanément ou alternativement, en fonction de l'effet recherché, pour agir sur le taux de remplissage du réservoir 15.

Une diminution du taux de remplissage du réservoir entraînera un déplacement de la portion haute 3 du bâti en direction de la surface, par coulissement le long des rails de guidage 5 de la portion basse. Inversement, une augmentation du taux de remplissage du réservoir entraînera un déplacement de la portion haute 3 du bâti en direction du fond.

Les commandes de la vanne et de l'électropompe peuvent être actionnées au coup par coup, préférablement à distance à l'aide du dispositif de transmission sans fil, ou de manière programmée si l'évolution des courants est bien connue. Comme cela a été mentionné, un capteur, de pression par exemple, peut être prévu pour détecter la profondeur de positionnement optimal de la roue à aubes à chaque instant. Ce capteur transmet les résultats de ses mesures aux circuits de gestion et de distribution, ou à des circuits électroniques dédiés, pour générer une réponse adaptée de l'appareil et modifier éventuellement le taux de remplissage du réservoir.

La figure 3 représente une vue partielle de face, simplifiée, d'un ensemble d'appareils hydroélectriques, similaires à celui de la figure 1, reliés mécaniquement deux à deux, selon un mode de réalisation préféré de la présente invention.

De manière avantageuse, les portions basses 2 des appareils sont reliées rigidement deux à deux, tout en étant fixées au fond, tandis que leurs portions hautes 3 peuvent être solidaires les unes des autres, au moins par groupes de quelques unités.

On peut prévoir que les arbres de rotation des différents appareils sont également reliés deux à deux, en étant tous connectés à un seul dispositif électromécanique 11 de génération de courant électrique.

On peut recourir à des cardans 30 pour assurer la liaison mécanique de leurs arbres de rotation, ou encore à des différentiels pour permettre des vitesses de rotation relatives différentes et prendre en compte des fluctuations locales de courants. On peut également envisager de lier les portions hautes deux à deux avec un certain jeu entre leurs profondeurs respectives, notamment en les reliant à l'aide de moyens élastiques, en particulier des ressorts.

En alternative, il est aussi possible de monter les portions hautes des différents appareils de telle manière qu'elles puissent se déplacer les unes par rapport aux autres.

Dans ce cas également, les arbres de rotation peuvent être reliés deux à deux au moyen de liaisons mécaniques du type cardan.

L'orientation spécifique de l'arbre de rotation de l'organe rotatif, à savoir perpendiculaire par rapport à la direction des courants, permet un accouplement aisé et en grand nombre de l'appareil hydroélectrique selon la présente invention et, de ce fait, l'implantation de ce dernier dans des régions à courants relativement faibles où d'autres appareils de l'art antérieur sont inexploitables.

Il est ainsi envisageable de prévoir des alignements de tels appareils accouplés les uns aux autres, voire de prévoir plusieurs rangées rapprochées de tels alignements. Dans ce cas, il peut être avantageux de disposer les alignements voisins en quinconce, c'est-à-dire qu'une zone d'un alignement située entre deux appareils devrait être disposée sensiblement en regard d'un appareil de chacun des alignements adjacents, suivant la direction des courants.

Par ailleurs, l'homme du métier pourra prévoir des aménagements adaptés à ses propres besoins en ce qui concerne les circuits de gestion et de distribution, les commandes de vannes et d'électropompe, etc...Bien entendu, lorsque les portions hautes sont accouplées de manière rigide, il n'est pas nécessaire de prévoir autant de circuits de gestion et de distribution qu'il y a d'appareils en alignement. Inversement, des commandes indépendantes peuvent être prévues lorsque les portions hautes sont aptes à se déplacer les unes par rapport aux autres.

On pourra également prévoir, dans des régions avec des courants en profondeur de disposer plusieurs appareils en alignement avec des roues à aubes agencées verticalement.

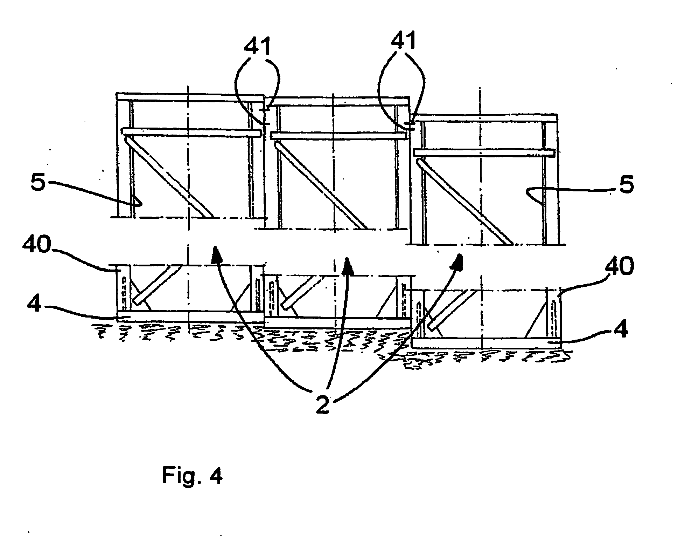

La figure 4 illustre, dans une vue de face simplifiée, un mode d'implantation particulier de l'ensemble d'appareils hydroélectriques selon la figure 3, notamment lorsque le fond n'est pas plan.

La fixation de la portion basse 2 de chaque bâti est préférablement effectuée sur une surface parfaitement horizontale, ceci afin que la structure soit bien verticale, pour que son mécanisme fonctionne parfaitement.

Toutefois, le sol marin étant rarement plan, on pourra par exemple procéder de l'une ou l'autre des façons suivantes:

- s'inspirer de ce qui se fait en matière de ducs d'albe en enfonçant, jusqu'à ce que l'on rencontre un sous sol ferme, quatre tubes destinés à recevoir à l'horizontale, par emboîtement, un élément de raccordement 40, celui-ci recevant ensuite les quatre tubes se trouvant aux angles de la portion basse 2; ou,

- si le sol marin n'est pas trop pentu, y faire une plateforme en ciment armé épaisse, en fixant solidement à l'intérieur, horizontalement, un élément ou un demi-élément de raccordement sur lequel les quatre tubes d'angles de la portion basse 2 viennent s'emboîter. Cette dalle de ciment constitue un lest s'ajoutant éventuellement à celui des réservoirs 15 remplis d'eau. Des réservoirs complémentaires (non représentés) peuvent être prévus, solidaires des portions basses 2 du bâti 1, pour assurer la fonction de lest, une fois remplis d'eau.

Un sommier d'ancrage intermédiaire peut également être utilisé en tant qu'élément de raccordement pour former la base 4 du bâti, en étant lié à la structure enterrée et agencé pour recevoir les éléments constitutifs de la portion basse 2.

La structure du bâti 1 pourra être réalisée en matériaux métalliques ou plastiques, sans sortir du cadre la présente invention, en fonction des besoins.

De manière générale, on peut prévoir de relier deux à deux les portions basses d'appareils adjacents au moyen de boulons 41, à titre indicatif non limitatif.

Dans les régions à fort risque de tempêtes, des mesures particulières supplémentaires peuvent être prévues pour renforcer l'ensemble d'appareils qui vient d'être décrit.

On pourra notamment prévoir des dimensions importantes pour les différentes structures et assemblages de structures, leur poids total et leur solidarisation constituant un élément important de leur stabilité. On pourra également les lester au maximum dans ce même but.

Par ailleurs, il est également envisageable d'entourer l'ensemble des appareils hydroélectriques constituant une unité de production par une ceinture d'autres structures (non représentées) dépourvues de machines motrices mais ayant, à leur sommet, sur une hauteur à déterminer, des éléments de brise-lames tels que tubes ou profilés verticaux et/ou horizontaux placés de manière à "casser" les lames de tempête. Cette structure particulière pourrait en outre porter un chemin de ronde pour surveiller et faciliter l'entretien de l'ensemble.

On peut en outre prévoir de ceinturer l'ensemble ci-dessus, y compris la structure brise-lames par des câbles spécialement adapté aux milieux aquatiques et parfaitement serrés.

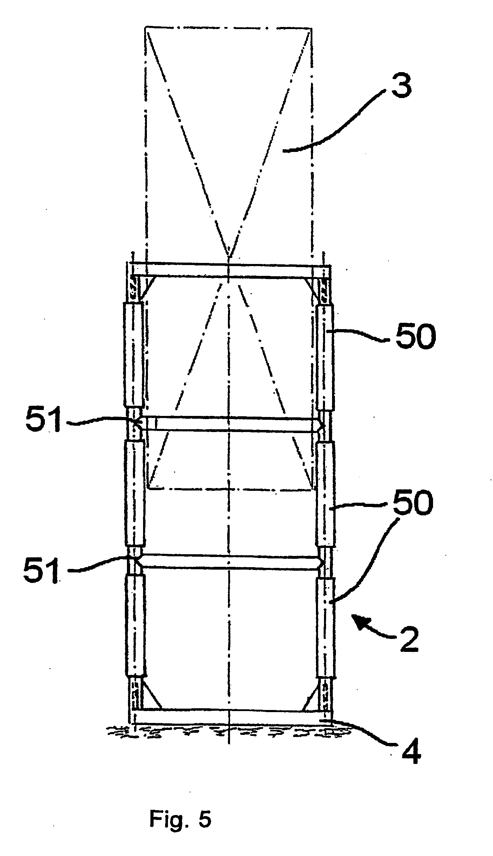

La figure 5 représente une vue de face simplifiée d'un appareil hydroélectrique selon une variante de réalisation de la présente invention.

Suivant cette variante de réalisation, le bâti 1 est formé par des tubes 50 emboîtés à force dans des éléments intermédiaires de raccordement 51, de telle manière qu'il n'est pas nécessaire de les souder. Des boulons peuvent éventuellement être prévus pour renforcer la tenue de la structure.

La description qui précède correspond à des modes de réalisation préférés de l'invention décrits à titre non limitatif. En particulier, les formes représentées et décrites pour les différents éléments constitutifs de l'appareil hydroélectrique ne sont pas limitatives.

Par ailleurs, il est envisageable, en alternative, de mettre en oeuvre l'appareil selon l'invention, ou un ensemble de tels appareils tel que cela a été décrit plus haut, suivant un mode de fixation au fond du milieu aquatique de type flottant.

Des flotteurs captifs pourraient être fixés en nombre et volume suffisants dans la partie la plus basse du bâti, cette partie devant se trouver - par suite de son niveau obtenu au moyen du remplissage plus ou moins important des réservoirs par électropompe - hors de la zone de circulation des courants et donc au dessous de ceux-ci.

De même, l'homme du métier ne rencontrera pas de difficulté particulière pour modifier le nombre de réservoirs en fonction de ses besoins et, éventuellement en prévoir un nombre inférieur ou supérieur au nombre d'organes rotatifs.

L'ensemble de l'assemblage pourrait être retenu sur place par un nombre suffisant de câbles lestés de la manière suivante:

- une extrémité lourdement lestée de chacun des câbles reposerait sur le fond du milieu aquatique;

- chaque câble passerait ensuite au dessus de l'un des tubes horizontaux de la partie la plus basse de l'assemblage de structures et, tout d'abord, dans deux anneaux le maintenant de part et d'autre de ce tube puis sur une poulie folle placée sur ce tube, entre les deux anneaux, (le câble pourrait aussi passer sur deux tubes)

- l'autre extrémité du câble pourrait être pendante dans l'eau, à quelques mètres de profondeur, au dessous de l'assemblage; elle serait lestée d'un poids nettement inférieur à celui maintenant le premier bout du câble sur le fond.

Ainsi l'assemblage de structures opposerait une résistance élastique aux tempêtes et reprendrait sa place après le passage de celles-ci.

Par ailleurs, des lests pourraient être constitués par de simples sacs de gravier fermés par une boucle leur permettant de glisser sur le câble les uns après les autres.

L'homme du métier ne rencontrera pas de difficulté particulière pour assurer la liaison mécanique des différents éléments constitutifs de l'appareil hydroélectrique selon la présente invention. Il pourra notamment prévoir de disposer des éléments intermédiaires de type nylon ou Téflon (marque déposée) entre des parties mobiles pour limiter les pertes de rendement et améliorer la longévité de ces parties, sans sortir du cadre de la présente invention.

De même, il est possible de prévoir, tel que mentionné plus haut, d'assembler l'appareil hydroélectrique sur la terre ferme avant de le remorquer avec son ou ses réservoirs vides jusqu'au lieu d'implantation, par exemple en mer, quel que soit le mode de fixation ultérieur au fond marin.

## Revendications

1. Appareil hydroélectrique, pour la production d'énergie électrique dans un milieu aquatique du type avec des courants, comportant un bâti (1) supportant un organe rotatif (8) présentant une pluralité de surfaces d'appui (10) destinées à coopérer avec ledit courant pour générer une rotation dudit organe rotatif, un dispositif électromécanique (11) pour produire un courant électrique à partir de ladite rotation dudit organe rotatif, et un dispositif d'ajustement (15, 16, 17) de la position dudit organe rotatif en référence à la surface du milieu aquatique comprenant un réservoir (15) présentant une ouverture (16) destinée à être positionnée sous la surface du milieu aquatique pour permettre de modifier le taux de remplissage en eau dudit réservoir,
**caractérisé en ce que** ledit bâti comporte une portion haute (3) assurant une fonction de support pour ledit organe rotatif (8) et montée en translation sur une portion basse (2) dudit bâti (1) de manière à former un ensemble télescopique et,
**en ce que** ladite ouverture (16) est variable et ledit réservoir est porté par ladite portion haute (3) dudit bâti (1).

2. Appareil hydroélectrique selon la revendication 1, **caractérisé en ce qu'**il comporte un dispositif de pompage (17) alimenté en énergie électrique à partir dudit dispositif électromécanique (11), par l'intermédiaire d'une connexion électrique, pour permettre de pomper de l'eau hors dudit réservoir (15).

3. Appareil hydroélectrique selon la revendication 1 ou 2, **caractérisé en ce que** ledit bâti (1) comporte en outre des moyens de fixation (4) agencés pour en permettre la fixation à un fond du milieu aquatique.

4. Appareil hydroélectrique selon la revendication 3, **caractérisé en ce que** lesdits moyens de fixation (4) comprennent une poulie destinée à coopérer avec un câble.

5. Appareil hydroélectrique selon la revendication 4, **caractérisé en ce que** ledit câble présente une première extrémité fixée au fond et une seconde extrémité libre portant un lest.

6. Appareil hydroélectrique selon la revendication 5, **caractérisé en ce que** ledit bâti (1) comprend un passage de câble définissant une butée pour ledit lest.

7. Appareil hydroélectrique selon l'une quelconque des revendications précédentes, **caractérisé en ce que** ladite portion haute (3) est agencée de manière à présenter une extrémité située en permanence à un niveau supérieur à celui de ladite surface du milieu aquatique.

8. Appareil hydroélectrique selon la revendication 7, **caractérisé en ce que** ledit dispositif électromécanique (11) est disposé sur ladite portion haute (3) dudit bâti(1).

9. Appareil hydroélectrique selon l'une quelconque des revendications précédentes, **caractérisé en ce que** ledit dispositif électromécanique (11) comprend des moyens de connexion électrique destinée à assurer le transfert de l'énergie électrique produite vers un dispositif de stockage d'énergie ou vers un dispositif d'acheminement vers la terre.

10. Appareil hydroélectrique selon l'une quelconque des revendications précédentes, **caractérisé en ce que** ledit organe rotatif (8) présente un arbre de rotation (7) destiné à être disposé suivant une direction sensiblement perpendiculaire à la direction de déplacement des courants.

11. Appareil hydroélectrique selon la revendication 10, **caractérisé en ce que** ledit organe rotatif (8) est une roue à aubes.

12. Appareil hydroélectrique selon l'une quelconque des revendications précédentes, lorsqu'il est destiné à être utilisé en relation avec des courants de marées océaniques, **caractérisé en ce que** ledit dispositif d'ajustement de la position dudit organe rotatif (8) comprend un circuit électronique (12) agencé de manière à modifier ladite position de manière prédéfinie en fonction des caractéristiques des marées.

13. Appareil hydroélectrique selon l'une quelconque des revendications précédentes, ledit organe rotatif (8) comprenant un arbre de rotation (7) relié audit bâti (1) au moyen d'au moins un palier (6), l'appareil étant **caractérisé en ce qu'**il comporte en outre des moyens de liaison mécanique (30) pour relier ledit arbre à au moins un arbre d'un organe rotatif d'un appareil hydroélectrique identique destiné à être disposé à proximité.

14. Ensemble d'appareils hydroélectriques selon la revendication 13, **caractérisé en ce qu'**il comporte au moins deux appareils hydroélectriques dont les portions basses (2) sont rigidement connectées l'une à l'autre et dont chacun comporte un arbre (7) couplé mécaniquement à au moins un arbre voisin.

15. Procédé d'installation d'une installation hydroélectrique comportant une pluralité d'appareils hydroélectriques selon l'une quelconque des revendications 1 à 13, comportant les étapes consistant à:
transporter lesdits appareils hydroélectriques depuis la terre jusqu'à l'emplacement souhaité pour leur installation dans un milieu aquatique,
procéder à l'établissement d'une connexion mécanique desdits appareils hydroélectriques avec le fond du milieu aquatique,
**caractérisé en ce que** l'étape de transport est effectuée avec lesdits appareils hydroélectriques ayant leurs réservoirs (15) respectifs vides, lesdits appareils étant déplacés à la surface du milieu aquatique.

## Claims

1. Hydroelectric apparatus for the production of electrical energy in an aquatic medium of the type containing currents, comprising a frame (1) bearing a rotating body (8) having multiple support surfaces (10) intended to work with said current to generate the rotation of said rotating body, an electromechanical device (11) to produce an electrical current from said rotation of said rotating body, and an adjustment device (15, 16, 17) for adjusting the position of said rotating body with reference to the surface of the aquatic medium comprising a tank (15) having an opening (16) intended to be positioned below the surface of the aquatic medium to permit the adjustment of the ratio of filling of said tank with water,
**characterised in that** said frame comprises an upper portion (3) performing a support function for said rotating body (8) and mounted in translation on a lower portion (2) of said frame (1) so as to form a telescopic assembly and,
**in that** said opening (16) is variable and said tank is borne by said upper portion (3) of the frame (1).

2. Hydroelectric apparatus according to claim 1, **characterised in that** it comprises a pumping device (17) supplied with electrical energy by said electromechanical device (11), by means of an electrical connection, to permit water to be pumped out of said tank (15).

3. Hydroelectric apparatus according to claim 1 or 2, **characterised in that** said frame (1) also comprises fixation means (4) arranged to permit its fixation to the base of the aquatic medium.

4. Hydroelectric apparatus according to claim 3, **characterised in that** said fixation means (4) comprise a pulley intended to work with a cable.

5. Hydroelectric apparatus according to claim 4, **characterised in that** said cable has a first end fixed to the base and a second free end carrying ballast.

6. Hydroelectric apparatus according to claim 5, **characterised in that** said frame (1) comprises a cable passage defining an abutment for said ballast.

7. Hydroelectric apparatus according to any of the preceding claims, **characterised in that** said upper portion (3) is arranged so as to have one end permanently located at a level higher than said surface level of the aquatic medium.

8. Hydroelectric apparatus according to claim 7, **characterised in that** said electromechanical device (11) is arranged on said upper portion (3) of the frame (1).

9. Hydroelectric apparatus according to any of the preceding claims, **characterised in that** said electromechanical device (11) comprises electrical connection means intended to ensure the transfer of the produced electrical energy towards an energy storage device or towards an earthing device.

10. Hydroelectric apparatus according to any of the preceding claims, **characterised in that** said rotating body (8) has a rotating shaft (7) intended to be arranged in a direction substantially perpendicular to the direction of movement of the currents.

11. Hydroelectric apparatus according to claim 10, **characterised in that** said rotating body (8) is a paddle wheel.

12. Hydroelectric apparatus according to any of the preceding claims, when it is intended to be used in relation to oceanic tidal currents, **characterised in that** said adjustment device for adjusting the position of said rotating body (8) comprises an electronic circuit (12) arranged so as to modify said position in a predefined manner according to the characteristics of the tides.

13. Hydroelectric apparatus according to any of the preceding claims, whereby said rotating body (8) comprises a rotating shaft (7) connected to said frame (1) by means of at least one bearing (6), whereby the apparatus is **characterised in that** it also comprises mechanical linkage means (30) to connect said shaft to at least one shaft of the rotating body of an identical hydroelectric apparatus intended to be placed in the vicinity.

14. Set of hydroelectric apparatus according to claim 13, **characterised in that** it comprises at least two hydroelectric apparatus, the lower portions (2) of which are rigidly connected to each other and each of which comprises a shaft (7) mechanically coupled to at least one adjacent shaft.

15. Installation procedure for a hydroelectric installation comprising multiple hydroelectric apparatus according to any of claims 1 to 13, comprising steps consisting of:
transporting said hydroelectric apparatus from land to the desired position of their installation in an aquatic medium,
establishing a mechanical connection between said hydroelectric apparatus and the base of the aquatic medium,
**characterised in that** the transportation stage is performed with said hydroelectric apparatus having their respective tanks (15) empty, whereby said apparatus are moved along the surface of the aquatic medium.

## Patentansprüche

1. Hydroelektrische Vorrichtung zur Erzeugung von elektrischer Energie in einem aquatischen Medium, das von jener Art mit Strömung ist, umfassend ein Gestell (1), das ein Drehorgan (8) trägt, das mehrere Auflageflächen (10) aufweist, die mit der Strömung zusammenwirken sollen, um eine Drehung des Drehorgans zu erzeugen, eine elektromechanische Vorrichtung (11) zum Erzeugen von elektrischem Strom ausgehend von der Drehung des Drehorgans, und eine Justierungsvorrichtung (15, 16, 17) für die Position des Drehorgans in Bezug auf die Oberfläche des aquatischen Mediums, die einen Behälter (15) umfasst, der eine Öffnung (16) aufweist, die unter der Oberfläche des aquatischen Mediums angeordnet sein soll, um den Wasserfüllstand des Behälters verändern zu können,
**dadurch gekennzeichnet, dass** das Gestell einen oberen Abschnitt (3) umfasst, der eine Tragefunktion für das Drehorgan (8) ausübt und verschiebbar auf einem unteren Abschnitt (2) des Gestells (1) befestigt ist, so dass eine teleskopische Einheit gebildet wird,
und **dadurch**, dass die Öffnung (16) variabel ist und der Behälter vom oberen Abschnitt (3) des Gestells (1) getragen wird.

2. Hydroelektrische Vorrichtung nach Anspruch 1, **dadurch gekennzeichnet, dass** sie eine Pumpvorrichtung (17) umfasst, die ausgehend von der elektromechanischen Vorrichtung (11) mittels einer elektrischen Verbindung mit elektrischer Energie versorgt wird, um Wasser aus dem Behälter (15) pumpen zu können.

3. Hydroelektrische Vorrichtung nach Anspruch 1 oder 2, **dadurch gekennzeichnet, dass** das Gestell (1) ferner Befestigungsmittel (4) umfasst, die angeordnet sind, um seine Befestigung auf einem Grund des aquatischen Mediums zu ermöglichen.

4. Hydroelektrische Vorrichtung nach Anspruch 3, **dadurch gekennzeichnet, dass** die Befestigungsmittel eine Riemenscheibe umfassen, die mit einem Kabel zusammenwirken soll.

5. Hydroelektrische Vorrichtung nach Anspruch 4, **dadurch gekennzeichnet, dass** das Kabel ein erstes Ende, das auf dem Grund befestigt ist, und ein zweites freies Ende aufweist, das einen Ballast trägt.

6. Hydroelektrische Vorrichtung nach Anspruch 5, **dadurch gekennzeichnet, dass** das Gestell (1) einen Kabeldurchlass umfasst, der einen Anschlag für den Ballast definiert.

7. Hydroelektrische Vorrichtung nach einem der vorhergehenden Ansprüche, **dadurch gekennzeichnet, dass** der obere Abschnitt (3) so angeordnet ist, dass er ein Ende aufweist, das sich permanent auf einem höheren Niveau befindet als jenes der Oberfläche des aquatischen Mediums.

8. Hydroelektrische Vorrichtung nach Anspruch 7, **dadurch gekennzeichnet, dass** die elektromechanische Vorrichtung (11) auf dem oberen Abschnitt (3) des Gestells (1) angeordnet ist.

9. Hydroelektrische Vorrichtung nach einem der vorhergehenden Ansprüche, **dadurch gekennzeichnet, dass** die elektromechanische Vorrichtung (11) elektrische Verbindungsmittel umfasst, die die Übertragung der erzeugten elektrischen Energie an eine Energiespeichervorrichtung oder an eine Vorrichtung zur Beförderung an Land sicherstellen sollen.

10. Hydroelektrische Vorrichtung nach einem der vorhergehenden Ansprüche, **dadurch gekennzeichnet, dass** das Drehorgan (8) eine Drehwelle (7) aufweist, die gemäß einer Richtung angeordnet werden soll, die im Wesentlichen senkrecht zur Bewegungsrichtung der Strömung verläuft.

11. Hydroelektrische Vorrichtung nach Anspruch 10, **dadurch gekennzeichnet, dass** das Drehorgan (8) ein Schaufelrad ist.

12. Hydroelektrische Vorrichtung nach einem der vorhergehenden Ansprüche, **dadurch gekennzeichnet, dass**, wenn sie in Zusammenhang mit ozeanischer Gezeitenströmung verwendet werden soll, die Justierungsvorrichtung für die Position des Drehorgans (8) einen elektronischen Schaltkreis (12) umfasst, der so angeordnet ist, dass die Position in vorausdefinierter Weise je nach Eigenschaften der Gezeiten verändert wird.

13. Hydroelektrische Vorrichtung nach einem der vorhergehenden Ansprüche, wobei das Drehorgan (8) eine Drehwelle (7) umfasst, die mit dem Gestell (1) mithilfe von mindestens einem Lager (6) verbunden ist, wobei die Vorrichtung **dadurch gekennzeichnet ist, dass** sie ferner mechanische Verbindungsmittel (30) umfasst, um die Welle mit mindestens einer Welle eines Drehorgans einer identischen hydroelektrischen Vorrichtung zu verbinden, die in der Nähe angeordnet werden soll.

14. Gruppe hydroelektrischer Vorrichtungen nach Anspruch 13, **dadurch gekennzeichnet, dass** sie mindestens zwei hydroelektrische Vorrichtungen umfasst, deren untere Abschnitte (2) starr miteinander verbunden sind und von denen jede eine Welle (7) umfasst, die mit mindestens einer benachbarten Welle mechanisch gekoppelt ist.

15. Installationsverfahren einer hydroelektrischen Installation mit mehreren hydroelektrischen Vorrichtungen nach einem der Ansprüche 1 bis 13, umfassend folgende Schritte:
Transportieren der hydroelektrischen Vorrichtungen vom Land zum gewünschten Standort für deren Installation in einem aquatischen Medium,
Errichten einer mechanischen Verbindung der hydroelektrischen Vorrichtungen mit dem Grund des aquatischen Mediums,
**dadurch gekennzeichnet, dass** der Schritt des Transportierens mit hydroelektrischen Vorrichtungen durchgeführt wird, deren Behälter (15) leer sind, wobei die Vorrichtungen auf der Oberfläche des aquatischen Mediums befördert werden.
